# EUROPEAN PATENT APPLICATION

(11) **EP 4 321 548 A1**
(43) Date of publication of application: **14.02.2024**
(21) Application number: 22784539.3
(22) Date of filing: 25.03.2022
(51) Int. Cl.: C08G 8/20, C08K 5/3477, C08L 61/12, C09K 3/14, C08J 5/14, F16D 69/02

(54) **HEAT-CURABLE RESIN COMPOSITION FOR FRICTION MATERIAL, AND FRICTION MATERIAL**

(30) Priority: 06.04.2021 JP 2021064598
(71) Applicant: Sumitomo Bakelite Co., Ltd., Shinagawa-ku Tokyo 140-0002 (JP)
(72) Inventor: MURAI Taketoshi, Tokyo 140-0002 (JP)
(74) Representative: Ter Meer Steinmeister & Partner
(86) International application number: PCT/JP2022/014562
(87) International publication number: WO 2022/215554

(57) **Abstract**

A heat-curable resin composition for a friction material includes a lignin-modified novolac-type phenol resin having a weight average molecular weight of equal to or more than 6,000, and a curing agent.

## Description

### TECHNICAL FIELD

The present invention relates to a heat-curable resin composition for a friction material, and a friction material formed from a cured product of the resin composition.

### BACKGROUND ART

Various developments have been achieved so far in relation to methods for producing lignin-modified phenol resins. Since lignin is readily soluble in alkalis, liquid resols that are obtained in the presence of basic catalysts have been mainly investigated, and in novolacs that are obtained in the presence of acid catalysts, introduction of lignin has been limited due to the low thermal fusibility of lignin. Thus, investigations have been conducted to utilize a lignin having a reduced molecular weight or a modified lignin obtained by various processes and operations. As this kind of technology, for example, the technology described in Patent Document 1 is known. In Patent Document 1, a technology for producing a lignin phenol resin having a weight average molecular weight of equal to or less than 5,000 by causing a lignin having a weight average molecular weight of equal to or less than 5,000, a phenol compound, and an aldehyde compound to react in the presence of an acid catalyst, is described. In Patent Document 1, the lignin phenol resin is used as a molding material for a friction material.

### RELATED DOCUMENT

### PATENT DOCUMENT

[Patent Document 1] Japanese Unexamined Patent Publication No. 2013-199561

### SUMMARY OF THE INVENTION

### TECHNICAL PROBLEM

However, the inventors of the present invention conducted an investigation, and it was found that the lignin phenol described in Patent Document 1 has room for improvement in terms of achieving a balance between heat resistance and abrasion resistance.

### SOLUTION TO PROBLEM

The present invention was made in view of the above-described problems, and the inventors found that a lignin-modified novolac-type phenol resin having a high molecular weight exhibits satisfactory processability when highly compounded by utilizing a lignin structure, and further found that a resin composition that can be suitably used for producing a friction material having both softness and excellent heat resistance is obtained by using a lignin-modified novolac-type phenol resin having a weight average molecular weight of equal to or more than 6,000, thus completing the present invention.

According to the present invention, there is provided a heat-curable resin composition for a friction material, the resin composition including a lignin-modified novolac-type phenol resin having a weight average molecular weight of equal to or more than 6,000 and a curing agent.

Furthermore, according to the present invention, there is provided a friction material formed from a cured product of the heat-curable resin composition for a friction material.

### ADVANTAGEOUS EFFECTS OF INVENTION

According to the present invention, a heat-curable resin composition for a friction material intended for producing a friction material which has both softness and excellent heat resistance, is provided.

### DESCRIPTION OF EMBODIMENTS

Embodiments of the present invention will be described below.

### [Heat-curable Resin Composition for Friction Material]

A heat-curable resin composition for a friction material of the present embodiment (in the present specification, may be simply referred to as "heat-curable resin composition") includes a lignin-modified novolac-type phenol resin having a weight average molecular weight of equal to or more than 6,000 and a curing agent. As the heat-curable resin composition of the present embodiment includes a lignin-modified novolac-type phenol resin having a weight average molecular weight of equal to or more than 6,000, a cured product thereof has both softness and characteristics that are resistant to heat deterioration, and therefore, the cured product can be suitably used as a friction material. Hereinafter, each component used for the heat-curable resin composition of the present embodiment will be described in detail.

### (Lignin-modified Novolac-type Phenol Resin)

The lignin-modified novolac-type phenol resin used for the heat-curable resin composition of the present embodiment has a weight average molecular weight of equal to or more than 6,000. As the heat-curable resin composition of the present embodiment includes a lignin-modified novolac-type phenol resin having such a high weight average molecular weight, a cured product thereof has softness and heat resistance appropriate for use as a friction material.

According to an embodiment, the lignin-modified novolac-type phenol resin has a lignin modification ratio of equal to or more than 25% and equal to or less than 60%. As the heat-curable resin composition of the present embodiment includes a lignin-modified novolac-type phenol resin having a lignin modification ratio in the above-described range, the heat-curable resin composition is excellent in terms of curability and moldability, and a resulting cured product has softness and heat resistance appropriate for use as a friction material. According to an embodiment, the lignin-modified novolac-type phenol resin has a biomass modification ratio of equal to or more than 35% and equal to or less than 60%. In the present invention, biomass includes lignin and vegetable oil, and preferred examples of the vegetable oil include cashew nut shell liquid (cashew oil) and sumac extract. According to the present embodiment, the biomass modification ratio refers to the total modification ratio for lignin and vegetable oil.

### (Method for Producing Lignin-modified Novolac-type Phenol Resin)

It is preferable that the lignin-modified novolac-type phenol resin having a weight average molecular weight of equal to or more than 6,000, which is used for the heat-curable resin composition of the present embodiment, is produced by causing a lignin compound, a phenol compound, and an aldehyde compound to react in the presence of an acid catalyst under the conditions in which the molar ratio (F/P) of the aldehyde compound to the phenol compound is equal to or more than 0.5. By carrying out a reaction under conditions in which the molar ratio (F/P) of the aldehyde compound to the phenol compound is in the above-described range, a lignin-modified novolac-type phenol resin having the above-mentioned desired weight average molecular weight and lignin modification ratio can be produced.

The materials and production conditions used for the production of the lignin-modified novolac-type phenol resin that is used for the heat-curable resin composition of the present embodiment will be described in detail below.

### (Phenol Compound)

Examples of the phenol compound used for the production of the lignin-modified novolac-type phenol resin used in the present embodiment include phenol, a phenol derivative, and a combination thereof. As the phenol derivative, a phenol having an optional substituent introduced into the benzene ring can be used. Examples of the substituent include a hydroxy group; a lower alkyl group such as a methyl group and an ethyl group; a halogen atom such as fluorine, chlorine, bromine, and iodine; an amino group; a nitro group; and a carboxy group. Specific examples of the phenol compound that can be used include phenol, catechol, resorcinol, hydroquinone, o-cresol, m-cresol, p-cresol, o-fluorophenol, m-fluorophenol, p-fluorophenol, o-chlorophenol, m-chlorophenol, p-chlorophenol, o-bromophenol, m-bromophenol, p-bromophenol, o-iodophenol, m-iodophenol, p-iodophenol, o-aminophenol, m-aminophenol, p-aminophenol, o-nitrophenol, m-nitrophenol, p-nitrophenol, 2,4-dinitrophenol, 2,4,6-trinitrophenol, salicylic acid, p-hydroxybenzoic acid, and combinations thereof. Regarding the phenol compound, one kind thereof may be used alone, or two or more kinds thereof may be used in combination.

As the phenol compound, an alkylphenol compound having 2 to 18 carbon atoms can also be used. The alkylphenol compound may have a branched chain in the alkyl chain or may have an unsaturated bond. Furthermore, the substitution position of the alkyl chain on the benzene ring may be any of ortho-, meta-, and para-substitutions. Examples of the alkylphenol compound include ethylphenol, propylphenol, isopropylphenol, butylphenol, secondary butylphenol, tertiary butylphenol, amylphenol, tertiary aminophenol, hexylphenol, heptylphenol, octylphenol, tertiary octylphenol, nonylphenol, tertiary nonylphenol, decylphenol, undecylphenol, dodecylphenol, tridecylphenol, tetradecylphenol, pentadecylphenol, cardanol, cardol, urushiol, hexadecylphenol, methyl cardol, heptadecylphenol, laccol, thitsiol, and octadecylphenol. As the alkylphenol compound, vegetable oils such as cashew nut shell liquid (cashew oil) and sumac extract can also be used.

Among these, it is preferable to use one or more selected from the group consisting of phenol, cresol, xylenol, alkylphenol, and bisphenol as the phenol compound, and from the viewpoint of production cost, it is preferable to use phenol, cresol, butylphenol, and bisphenol A.

### (Lignin Compound)

The lignin compound used for the production of the lignin-modified novolac-type phenol resin used in the present embodiment includes at least one selected from lignin and a lignin derivative.

Along with cellulose and hemicellulose, lignin is a major component forming the structure of the plant body and is one of the most abundant aromatic compounds in nature. Since lignin is partly bound together and exists as lignocellulose in plants, lignin often refers to substances obtainable from plants through decomposition and the like, and examples include pulp lignins such as kraft lignin, lignin sulfonic acid, soda lignin, and soda-anthraquinone lignin; organosolv lignin; lignophenol obtained when phenol is added to high-temperature high-pressure water-treated lignin or blasted lignin during extraction or the like with concentrated sulfuric acid; and phenolized lignin. The origin of lignin is not particularly limited, and examples thereof include wood that contains lignin and forms woody parts, and herbs, which include coniferous trees such as cedar, pine, cypress, and spruce; broadleaf trees such as beech, birch, oak, zelkova, and eucalyptus; and gramineous plants (herbs) such as paddy, wheat, maize, and bamboo.

In the present embodiment, the term "lignin derivative" refers to a unit structure that constitutes lignin, or a compound having a structure similar to the unit structure that constitutes lignin. A lignin derivative has a phenol derivative as a unit structure. Since this unit structure has carbon-carbon bonds and carbon-oxygen-carbon bonds, which are chemically and biologically stable, the unit structure is less likely to be affected by chemical deterioration and biological decomposition.

Examples of the lignin derivative include guaiacylpropane (ferulic acid) represented by Formula (A) of the following Formula (1), syringylpropane (sinapic acid) represented by the following Formula (B), and 4-hydroxyphenylpropane (coumaric acid) represented by the following Formula (C). The composition of the lignin derivative varies depending on the biomass used as a raw material. In coniferous trees, lignin derivatives including a guaiacylpropane structure are mainly extracted. In broadleaf tress, lignin derivatives including a guaiacylpropane structure and a syringylpropane structure are mainly extracted. In herbs, lignin derivatives including a guaiacylpropane structure, a syringylpropane structure, and a 4-hydroxyphenylpropane structure are mainly extracted.

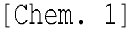

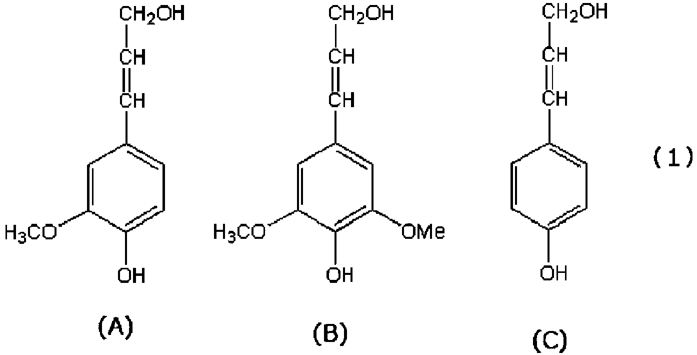

The lignin derivative is preferably obtained by decomposing biomass. Since biomass is a product obtained by incorporating and fixating carbon dioxide in the atmosphere during the process of photosynthesis, biomass contributes to suppression of an increase in carbon dioxide in the atmosphere, and industrial utilization of biomass can contribute to suppression of global warming. Examples of the biomass include lignocellulosic biomass. Examples of the lignocellulosic biomass include leaves, bark, branches, and wood of plants containing lignin, and processed products of these. Examples of the plants containing lignin include the above-mentioned broadleaf trees, coniferous trees, and herbs.

Examples of a method for decomposing biomass include a method of performing a chemical treatment, a method of performing a hydrolysis treatment, a steam blasting method, a supercritical water treatment method, a subcritical water treatment method, a method of performing a mechanical treatment, a cresol sulfate method, and a pulp production method. From the viewpoint of environmental load, a steam blasting method, a subcritical water treatment method, and a method of performing a mechanical treatment are preferred. From the viewpoint of cost, a pulp production method is preferred. Furthermore, from the viewpoint of cost, it is preferable to use a by-product of biomass utilization. A lignin derivative can be prepared by, for example, subjecting biomass to a decomposition treatment in the presence of various cooking liquors and solvents at 150°C to 400°C and 1 to 40 MPa for 8 hours or less. Lignin derivatives can be prepared by the methods disclosed in Japanese Unexamined Patent Publication No. 2009-084320, Japanese Unexamined Patent Publication No. 2012-201828, and the like.

Examples of the lignin derivative include a product obtained by decomposing lignocellulose in which lignin, cellulose, and hemicellulose are bound together. Examples of the lignin derivative may include lignin decomposition products, cellulose decomposition products, hemicellulose decomposition products, and the like, all of which include compounds having a lignin skeleton as main components. Furthermore, the lignin derivative may also include biomass-derived or process-derived inorganic substances; however, when the lignin derivative is used for the use applications of the present embodiment, the content of the inorganic substances is preferably equal to or less than 10% by mass with respect to the total amount of the lignin derivative used.

It is preferable that the lignin derivative has many reaction sites on which a curing agent acts through an electrophilic substitution reaction toward the aromatic rings, and from the viewpoint that a compound having less steric hindrance in the vicinity of the reaction sites has excellent reactivity, it is preferable that at least one of the orthoposition and the para-position of an aromatic ring including a phenolic hydroxyl group is unsubstituted, while a lignin derived from coniferous trees and herbs including a large quantity of structures of guaiacyl nuclei and 4-hydroxyphenyl nuclei as the aromatic units of lignin is preferred. Regarding the lignin derivative, those disclosed in Japanese Unexamined Patent Publication No. 2009-084320, Japanese Unexamined Patent Publication No. 2012-201828, and the like can be used.

The lignin derivative may also be a lignin derivative having a functional group in addition to the above-described basic structure (secondary derivative of lignin).

The functional group carried by the secondary derivative of lignin is not particularly limited; however, for example, a functional group capable of reacting with one or more of the same functional groups, or a functional group capable of reacting with another functional group is suitable. Specific examples thereof include an epoxy group, a methylol group, as well as a vinyl group, an ethynyl group, a maleimide group, a cyanate group, and an isocyanate group, all of which have carbon-carbon unsaturated bonds. Among these, a lignin derivative into which a methylol group is introduced (methylolated) is preferably used. Such a secondary derivative of lignin undergoes self-crosslinking through a selfcondensation reaction between methylol groups and also crosslinks with an alkoxymethyl group and a hydroxyl group in the crosslinking agent described below. As a result, a lignin-modified novolac-type phenol resin having a homogeneous and rigid skeleton and having excellent solvent resistance is obtained.

In addition, the lignin derivative used in the present embodiment may have a carboxyl group. A lignin obtained by a pulping process or a high-temperature high-pressure water treatment may have a carboxyl group. Since a lignin-modified novolac-type phenol resin obtained from a lignin derivative having a carboxyl group has many crosslinking points for a curing agent that will be described below, the crosslinking density of the resulting crosslinked body can be improved, and as a result, a crosslinked body having excellent solvent resistance can be obtained.

In a case where the above-mentioned lignin derivative has a carboxyl group, the carboxyl group can be checked by the presence or absence of absorption of a peak at 172 to 174 ppm when the lignin derivative is subjected to a ¹³C-NMR analysis pertaining to the carboxyl group.

The lignin compound used for the production of the lignin-modified novolac-type phenol resin used in the present embodiment has a weight average molecular weight of, for example, equal to or more than 2,000 and equal to or less than 100,000. The lower limit value of the weight average molecular weight is preferably equal to or more than 2,500, more preferably equal to or more than 3,000, and even more preferably equal to or more than 4,000. The upper limit value of the weight average molecular weight is preferably equal to or less than 90,000, more preferably equal to or less than 80,000, and even more preferably equal to or less than 75,000. A heat-curable resin composition including a lignin-modified novolac-type phenol resin obtained by using a lignin compound having a weight average molecular weight in the above-described range has excellent curability, and a cured product thereof has softness and heat resistance appropriate for use as a friction material. The weight average molecular weight is a polystyrene-equivalent weight average molecular weight measured by gel permeation chromatography and can be determined by the method of the Examples.

The lignin compound used for the production of the lignin-modified novolac-type phenol resin used in the present embodiment has a number average molecular weight of, for example, equal to or more than 200 and equal to or less than 5,000. The lower limit value of the number average molecular weight is preferably equal to or more than 300, more preferably equal to or more than 350, and even more preferably equal to or less than 400. The upper limit value of the number average molecular weight is preferably equal to or less than 4,000, more preferably equal to or less than 3,000, and even more preferably equal to or less than 2,000. A lignin compound having a number average molecular weight in the above-described range is preferred because the lignin compound has excellent reactivity and therefore has excellent workability in the production process for the lignin-modified novolac-type phenol resin. Furthermore, by using a lignin compound having a number average molecular weight in the above-described range, the resulting lignin-modified novolac-type phenol resin has excellent curability, and at the same time, a cured product thereof can have softness and heat resistance appropriate for use as a friction material. The number average molecular weight is a polystyrene-equivalent number average molecular weight measured by gel permeation chromatography and can be determined by the method of the Examples.

Here, an example of the method for measuring the molecular weight by the above-mentioned gel permeation chromatography will be described.

In the method for measuring the molecular weight by gel permeation chromatography, first, a lignin derivative is dissolved in a solvent, and a measurement sample is prepared. The solvent used at this time is not particularly limited as long as it can dissolve the lignin derivative; however, from the viewpoint of the measurement accuracy of gel permeation chromatography, for example, tetrahydrofuran and N-methyl-2-pyrrolidone are preferred. Since the lignin compound of the present embodiment can include insoluble matter based on biomass, process-derived inorganic substances, and plant-derived high molecular weight organic substances, the molecular weight of the lignin compound is determined by selecting an appropriate solvent and filtering the insoluble matter. In order to increase the lignin modification ratio of the obtained lignin-modified novolac-type phenol resin, the content of the insoluble matter of the lignin compound used is preferably equal to or less than 30% by mass in an appropriate solvent. The molecular weight of the lignin-modified novolac-type phenol resin can be similarly determined by filtering the insoluble matter. The content of the insoluble matter in the lignin-modified novolac-type phenol resin is preferably equal to or less than 15% by mass, and more preferably equal to or less than 10% by mass. When the amount of the content is to the above-described extent, the lignin-modified novolac-type phenol resin has satisfactory curability and can be cured particularly uniformly.

Next, "TSKgel SuperAW4000 (manufactured by Tosoh Corporation)", "TSKgel SuperAW3000 (manufactured by Tosoh Corporation)", "TSKgel SuperAW2500 (manufactured by Tosoh Corporation)", and "TSKgel SuperAW2500 (manufactured by Tosoh Corporation)", which are organic general-purpose columns packed with styrene-based polymer packing agents, are connected in series in a GPC system "HLC-8420GPC EcoSEC Elite (manufactured by Tosoh Corporation)". 30 µL of the above-mentioned measurement sample is injected into this GPC system, N-methyl-2-pyrrolidone as an eluent is developed at 40°C at a rate of 0.3 mL/min, and the retention time is measured by utilizing the differential refractive index (RI) and the ultraviolet absorbance (UV). From a separately created calibration curve showing the relationship between the retention time and the molecular weight of polystyrene standards, the number average molecular weight and the weight average molecular weight of the target lignin compound can be calculated. The refractive index is preferred as the detection mode.

The molecular weights of the polystyrene standards used for creating the calibration curve are not particularly limited; however, for example, polystyrene standards (manufactured by Tosoh Corporation) having weight average molecular weights of 2,110,000, 1,090,000, 427,000, 190,000, 37,900, 18,100, 5,970, 2,420, and 500 can be used.

The softening point of the lignin compound used for the production of the lignin-modified novolac-type phenol resin of the present embodiment is preferably equal to or higher than 90°C, more preferably equal to or higher than 110°C, and even more preferably equal to or higher than 130°C. On the other hand, a lignin compound with a softening point which is so high that cannot be measured can be used. When a lignin-modified novolac-type phenol resin having a high modification ratio is produced by using such a lignin compound, the resulting modified novolac-type phenol resin has a high molecular weight, low fluidity, and poor processability. However, despite that the lignin-modified novolac-type phenol resin of the present embodiment is a lignin-modified phenol resin having a high lignin modification ratio obtainable from such a lignin compound and having a high molecular weight, unexpectedly satisfactory processability is obtained.

The content of volatile matter of the lignin compound used in the present embodiment is preferably equal to or less than 60% by mass, more preferably equal to or less than 50% by mass, and even more preferably equal to or less than 40% by mass. When the volatile matter of the lignin compound is within the above-described range, the reactivity of the lignin compound can be improved, and the reaction rate of the resulting lignin-modified novolac-type phenol resin can be increased. The main volatile matter is often water, and for example, the content is calculated by spreading 4 g in an aluminum cup and drying it at 80°C for 20 hours.

The softening point of the lignin compound can be measured according to JISK2207 by using a ring and ball type softening point tester (for example, ASP-MG2 type manufactured by Meltec Corporation). When the lignin compound includes a large amount of water, measurement is made after the lignin compound is completely dried at a temperature equal to or lower than 70°C. In the present embodiment, for example, when a satisfactory sample cannot be prepared due to the thermal fusibility of the lignin compound with a hot plate at 150°C to 200°C, it is determined that the softening point is too high to be measured.

When a lignin compound obtained by decomposing biomass, a large amount of components having a low molecular weight may be mixed in, and these components may cause volatile matter and foul odor during heating and a decrease in the softening point. These components can be utilized as they are, or can be removed by heating, drying, and the like of the lignin compound to adjust the softening point and foul odor.

### (Aldehyde Compound)

Examples of the aldehyde compound used for the production of the lignin-modified novolac-type phenol resin used in the present embodiment include formaldehyde, paraformaldehyde, trioxane, acetaldehyde, propionaldehyde, polyoxymethylene, chloral, hexamethylenetetramine, furfural, glyoxal, n-butylaldehyde, caproaldehyde, allylaldehyde, benzaldehyde, crotonaldehyde, acrolein, tetraoxymethylene, phenyl acetaldehyde, o-tolualdehyde, salicylaldehyde, and paraxylene dimethyl ether. Preferred are formaldehyde, paraformaldehyde, trioxane, polyoxymethylene, acetaldehyde, paraxylene dimethyl ether, and combinations thereof. Regarding the aldehyde compound, one kind thereof may be used alone, or two or more kinds thereof may be used in combination. Among these, it is preferable to use formaldehyde or acetaldehyde from the viewpoints of productivity and low cost.

### (Acid Catalyst)

The acid catalyst used for the production of the lignin-modified novolac-type phenol resin used in the present embodiment may be any acid catalyst that can be used as a reaction catalyst, and an organic acid, an inorganic acid, and a combination thereof can be used. Examples of the organic acid include acetic acid, formic acid, oxalic acid, malonic acid, succinic acid, glutaric acid, adipic acid, benzoic acid, salicylic acid, sulfonic acid, phenolsulfonic acid, and p-toluenesulfonic acid. Examples of the inorganic acid include hydrochloric acid, sulfuric acid, a sulfuric acid ester, phosphoric acid, and a phosphoric acid ester.

In the production of the lignin-modified novolac-type phenol resin of the present embodiment, the molar ratio (F/P) of the aldehyde compound to the phenol compound is, for example, equal to or more than 0.5, preferably equal to or more than 0.55, more preferably is equal to or more than 0.6. The upper limit value of the molar ratio (F/P) of the aldehyde compound to the phenol compound is, for example, equal to or less than 1.2, preferably equal to or less than 1.1, and more preferably equal to or less than 1.0. By carrying out the reaction under the conditions in which the molar ratio (F/P) of the aldehyde compound to the phenol compound is in the above-described range, a lignin-modified novolac-type phenol resin having a weight average molecular weight of equal to or more than 6,000 and having both processability and strength improved together, can be obtained.

In the production of the lignin-modified novolac-type phenol resin of the present embodiment, the step of causing a lignin compound, a phenol compound, and an aldehyde compound to react in the presence of an acid catalyst may include a step (step 1) of mixing the lignin compound and the phenol compound under heating at a temperature equal to or higher than 70°C and equal to or lower than 120°C to disperse the lignin compound and obtain a mixture; a step (step 2) of mixing an acid catalyst therein simultaneously with step 1 or after step 1; and a step (step 3) of mixing the aldehyde compound therein after step 2. Furthermore, it is preferable that the step of causing a lignin compound, a phenol compound, and an aldehyde compound to react in the presence of an acid catalyst is carried out at a temperature of, for example, 60°C to 120°C, and preferably 80°C to 100°C, for example, for a reaction time of 10 minutes to 100 minutes. As a result, the reaction can be carried out efficiently and sufficiently. Furthermore, by carrying out the reaction under heating, the starting materials are uniformly mixed, the resulting lignin-modified novolac-type phenol resin can be cured uniformly due to intermolecular entanglement and intermolecular action, and therefore, molding with excellent dimensional accuracy can be realized. The reaction time is not particularly limited and may be appropriately determined according to the types of starting materials, the molar ratio of blending, the amount of use and type of catalyst, and the reaction conditions. The reaction mixture after the reaction may be subjected to post-treatment. For the post-treatment, for example, distillation under heating (for example, equal to or higher than 150°C) or at normal pressure, distillation under reduced pressure, or a combination thereof can be used.

It is preferable to carry out the above-described step 1, step 2, and step 3 without a solvent; however, an organic solvent or water may be used as the solvent. Hydrated lignin may be used instead of adding water. Examples of the organic solvent include an alcohol, a ketone, an ester, an ether, and a hydrocarbon. Examples of the alcohol include methanol, ethanol, propanol, isopropanol, butanol, pentanol, hexanol, octanol, ethylene glycol, diethylene glycol, triethylene glycol, propylene glycol, and glycerin. Examples of the ketone include acetone, methyl ethyl ketone, methyl isobutyl ketone, diisobutyl ketone, and cyclohexanone. Examples of the ester include methyl acetate, ethyl acetate, propyl acetate, butyl acetate, methoxybutyl acetate, amyl acetate, methyl lactate, ethyl lactate, and butyl lactate. Examples of the ether include propyl ether, dioxane, methyl cellosolve, ethyl cellosolve, propyl cellosolve, butyl cellosolve, propylene glycol monomethyl ether, propylene glycol monoethyl ether, propylene glycol monopropyl ether, propylene glycol monobutyl ether, methyl carbitol, ethyl carbitol, butyl carbitol, methyl cellosolve acetate, ethyl cellosolve acetate, propyl cellosolve acetate, butyl cellosolve acetate, propylene glycol monomethyl ether acetate, propylene glycol monoethyl ether acetate, propylene glycol monopropyl ether acetate, and propylene glycol monobutyl ether acetate. Examples of the hydrocarbon include toluene, xylene, pentane, hexane, cyclohexane, heptane, octane, decane, solvent naphtha, industrial gasoline, petroleum ether, petroleum benzine, and ligroin. Regarding these, one kind thereof may be used alone, or two or more kinds thereof may be used in combination.

Here, in conventional methods of increasing the molecular weight of the lignin-modified novolac-type phenol resin by adjusting the reaction ratio of the phenol compound, the lignin compound, and the aldehyde compound, the viscosity of the reactants increases, dehydration is less likely to occur, and therefore, the process time may become longer. Furthermore, a large amount of the phenol compound may remain unreacted.

In contrast, in the present embodiment, the process time can be shortened, and the yield of the resin can be increased, as compared with a conventional case of increasing the molecular weight with the reaction ratio of the phenol compound, the lignin compound, and the aldehyde compound. Furthermore, by adjusting the molar ratio (F/P) of the aldehyde compound to the phenol compound to the above-described range, and adjusting the molecular weight, the molecular weight distribution, and the amount of addition of the lignin compound used, the characteristics of the obtained lignin-modified novolac-type phenol resin and the physical properties of the resin material can be adjusted to desired ranges.

The lignin-modified novolac-type phenol resin obtainable by the above-described method has a weight average molecular weight of equal to or more than 6,000 and has a weight average molecular weight of, for example, equal to or more than 6,000 and equal to or less than 50,000, preferably equal to or more than 6,500 and equal to or less than 40,000, and more preferably equal to or more than 7,000 and equal to or less than 30,000. A lignin-modified novolac-type phenol resin having a weight average molecular weight in the above-described range has excellent curing characteristics, and a cured product thereof has softness and heat resistance appropriate for use as a friction material. The lignin-modified novolac-type phenol resin of the present embodiment has a lignin modification ratio of equal to or more than 25% and equal to or less than 60%, preferably equal to or more than 30% and equal to or less than 55%, and more preferably equal to or more than 35% and equal to or less than 55%. As the lignin-modified novolac-type phenol resin of the present invention has a lignin modification ratio in the above-described range, a cured product thereof has softness and heat resistance appropriate for use as a friction material and also has excellent curability and moldability.

### (Curing Agent)

Examples of the curing agent used for the heat-curable resin composition for a friction material of the present embodiment include an amine-based curing agent. As the amine-based curing agent, specifically, hexamethylenetetramine, hexamethoxymethylol melamine, and the like can be used. As the amine-based curing agent, for example, it is preferable to use hexamethylenetetramine.

The content of the curing agent is, for example, 7 parts by mass to 30 parts by mass, and preferably 10 parts by mass to 25 parts by mass, with respect to 100 parts by mass of the lignin-modified novolac-type phenol resin. A heat-curable resin composition having satisfactory curability can be obtained by setting the content to be within the above-described numerical value range.

When the heat-curable resin composition of the present embodiment includes hexamethylenetetramine as a curing agent, the amount of hexamethylenetetramine is preferably equal to or more than 2% by mass and equal to or less than 20% by mass, more preferably equal to or more than 5% by mass and equal to or less than 17% by mass, and even more preferably equal to or more than 8% by mass and equal to or less than 15% by mass, with respect to the lignin-modified novolac-type phenol resin. When the blending amount of hexamethylenetetramine is less than the above-described lower limit value, curing of the lignin-modified novolac-type phenol resin may be insufficient, and when the blending amount is more than the above-described upper limit value, gas generated by decomposition of hexamethylenetetramine may cause cracks or swelling in the obtained cured product.

### (Other Components)

The heat-curable resin composition for a friction material of the present embodiment may include a filler material. As the filler material, for example, a fiber base material, an organic filler material, or an inorganic filler material can be used. A fiber base material is a filler material having a fibrous shape. The organic filler material and the inorganic filler material may be each either a granular-shaped filler material or a plate-shaped filler material. The plate-shaped filler material is a filler material whose shape is a plate shape. A granular-shaped filler material is a filler material having a shape other than a fibrous shape and a plate shape, including irregular shapes. These may be used singly, or two or more kinds thereof may be used in combination.

Regarding the granular-shaped filler material, for example, granular inorganic filler materials can be used, and glass beads, glass powder, calcium carbonate, talc, silica, aluminum hydroxide, clay, mica, and the like can be used.

Examples of the fibrous-shaped filler material include fibrous-shaped inorganic filler materials such as glass fibers, carbon fibers, asbestos fibers, metal fibers, wollastonite, attapulgite, sepiolite, rock wool, aluminum borate whiskers, potassium titanate fibers, calcium carbonate whiskers, titanium oxide whiskers, and ceramic fibers; and fibrous-shaped organic filler materials such as aramid fibers, polyimide fibers, and poly(paraphenylenebenzobisoxazole fibers). These may be used alone, or two or more kinds thereof may be used in combination.

Furthermore, examples of the plate-shaped filler materials and the granular-shaped filler materials include talc, kaolin clay, calcium carbonate, zinc oxide, calcium silicate hydrate, mica, glass flakes, glass powder, magnesium carbonate, silica, titanium oxide, alumina, aluminum hydroxide, magnesium hydroxide, barium sulfate, calcium sulfate, calcium sulfite, zinc borate, barium metaborate, aluminum borate, calcium borate, sodium borate, aluminum nitride, boron nitride, silicon nitride, and pulverization products of the above-described fibrous-shaped filler materials.

The content of the filler material in the heat-curable resin composition is, for example, 25 parts by mass to 500 parts by mass, preferably 50 parts by mass to 400 parts by mass, and more preferably 100 parts by mass to 300 parts by mass, with respect to 100 parts by mass of the lignin-modified novolac-type phenol resin. By adjusting the content to be equal to or more than the above-described lower limit value, a cured product of the heat-curable resin composition can have excellent heat resistance. By adjusting the content to be equal to or less than the above-described upper limit value, production stability of a cured product of the heat-curable resin composition can be enhanced.

The heat-curable resin composition of the present embodiment may include a curing catalyst. Examples of the curing catalyst include organic phosphine compounds such as triphenylphosphine and tributylphosphine; aromatic carboxylic acids such as benzoic acid and salicylic acid; dicarboxylic acids such as phthalic acid; and basic compounds such as an inorganic basic compound and an organic basic compound. Furthermore, these can be used singly or in combination of a plurality thereof.

The blending proportion of the curing catalyst is not particularly limited; however, the blending proportion is preferably equal to or more than 0.1% by mass and equal to or less than 5% by mass, and more preferably equal to or more than 0.5 parts by mass and equal to or less than 5 parts by mass, with respect to 100 parts by mass of the solid content of the heat-curable resin composition. When the blending proportion of the curing catalyst is equal to or more than the above-described lower limit value, curing of the resin is sufficiently promoted. On the other hand, when the blending proportion is equal to or less than the above-described upper limit value, a cured product having high heat resistance can be obtained without deteriorating fluidity of the composition during molding.

Examples of the inorganic basic compound used as the curing catalyst include alkali metal hydroxides and/or alkaline earth metal hydroxides, and specific examples thereof include sodium hydroxide, potassium hydroxide, calcium hydroxide, barium hydroxide, magnesium hydroxide, and aluminum hydroxide. Among these, one kind thereof can be used alone, or two or more kinds thereof can be used in combination.

Examples of the organic basic compound used as the curing catalyst include aliphatic or alicyclic primary, secondary, or tertiary amines, an aliphatic amine having an aromatic ring, an aromatic amine, a heterocyclic amine, and heterocyclic compounds such as a nitrogen-containing aromatic heterocyclic compound, an imidazole, a sulfenamide, a thiazole, and an azo compound.

Examples of the organic basic compound used as the curing catalyst include triethylamine, benzyldimethylamine, α-methylbenzyldimethylamine, triethanolamine, n-butylamine, diphenylamine, ethylamine, diethylamine, triethylamine, dipropylamine, ethylenediamine, aniline, methylaniline, 1-aminoadamantane, 4-aminodiphenylamine, 1-naphthylamine, octadecylamine, diphenylamine, N-isopropyl-N'-phenyl-p-phenylenediamine, phenylamine, diphenylamine, triphenylamine, imidazoles, sulfenamides, thiazoles, 2-methylimidazole, 2-undecylimidazole, 2-heptadecylimidazole, 2-phenylimidazole, 2-phenyl-4-methylimidazole, 1-cyanoethyl-2-undecylimidazole, 1-cyanoethyl-2-phenylimidazole, 2,4-diamino-6-[2'-methylimidazolyl-(1')]-ethyl-s-triazine, 2,4-diamino-6-[2'-undecylimidazolyl-(1')]-ethyl-s-triazine, 2,4-diamino-6-[2'-ethyl-4'-methylimidazolyl-(1')]-ethyl-s-triazine, 2-phenyl-4,5-dihydroxymethylimidazole, 2-phenyl-4-methyl-5-hydroxymethylimidazole, 2,3-dihydro-1H-pyrrolo[1,2-a] benzimidazole, 2-methylimidazoline, 2-phenylimidazoline, 2,4-diamino-6-vinyl-s-triazine, 2,4-diamino-6-methacryloyloxyethyls-triazine, N-cyclohexyl-2-benzothiazole sulfenamide, N-oxydiethylene-2-benzothiazoline sulfenamide, N,N-dicyclohexyl-2-benzothiazolyl sulfenamide, 2-mercaptobenzothiazole, 2-(2,4-dinitrophenyl)mercaptobenzothiazole, 2-(2,4-dinitrophenylthio)mercaptobenzothiazole, 2-(2,6-diethyl-4-moripholinothio)benzothiazole, diazabicycloundecene, quinuclidine, piperazine, 1,4-diazabicyclo[2.2.2]octane, and cyclic polyamine. These can be used singly or in combination of two or more kinds thereof. Among these, since a cured product of the heat-curable resin composition has improved heat resistance, it is preferable to use nitrogen-containing aromatic heterocyclic compounds such as 2-methylimidazole, 2-phenylimidazole, 2,4-diamino-6-[2'-methylimidazolyl-(1')]-ethyls-triazine, and diazabicycloundecene. Regarding these curing catalysts, one kind thereof can be used alone, or two or more kinds can be used in combination.

### [Production of Heat-curable Resin Composition for Friction Material]

The heat-curable resin composition for a friction material of the present embodiment can be produced by mixing a powdery resin composition including a lignin-modified novolac-type phenol resin with a friction material. More specifically, first, a lignin-modified novolac-type phenol resin, a curing agent, and additives when used (for example, a promoting agent, a trace amount of silica, and a lubricant) are blended, mixed, or melt-kneaded in advance with a kneader or a roll, or the like, and the resultant is pulverized to obtain a powdery resin composition. It is preferable that the powdery resin composition has a median particle size of equal to or more than 10 um and equal to or less than 60 um, from the viewpoint of handleability. Next, a heat-curable resin composition for a friction material can be produced by uniformly mixing the obtained powdery resin composition and a friction material (organic fibers, inorganic filler, other additives, and the like), or melt-kneading all raw materials and granulating or pulverizing the kneaded product. The heat-curable resin composition for a friction material obtained by melt-kneading is provided in the form of powder, granules, a tablet, or a sheet.

### [Friction Material]

A friction material of the present embodiment can be produced by curing the above-mentioned heat-curable resin composition. For example, a friction material can be produced by thermally curing the above-mentioned heat-curable resin composition, and more specifically, a friction material can be produced by filling a mold with the above-mentioned heat-curable resin composition, performing heating and compression molding under the conditions of 130°C to 180°C and 10 to 100 MPa for 1 to 20 minutes, and then performing a post-cure treatment at 160°C to 250°C as necessary.

The friction material of the present embodiment can be suitably used as, for example, a brake pad, a brake lining, or a clutch facing.

The friction material of the present embodiment obtained by the above-described method has softness, excellent heat resistance, and excellent abrasion resistance.

Thus, the embodiments of the present invention have been described above; however, these are only examples of the present invention, and various configurations other than the above-described ones can be employed.

### EXAMPLES

Hereinafter, the present invention will be described by way of Examples and Comparative Examples; however, the present invention is not intended to be limited to these.

### [Examples 1 to 5 and Comparative Examples 1 and 2]

### (Preparation of Lignin-modified Novolac-type Phenol Resin)

A lignin-modified novolac-type phenol resin was prepared by the method shown in each Preparation Example.

### (Preparation Example 1)

### (Preparation of Lignin Derivative) First, a lignin derivative used for synthesizing a lignin-modified novolac-type phenol resin was prepared by the following procedure.

1500 parts by weight of cedar wood flour having a moisture content of 50%, as well as 5000 parts by weight of pure water, 180 parts by weight of sodium hydroxide, and 120 parts by mass of sodium carbonate as a cooking liquor, and 7.5 parts by weight of 9,10-anthraquinone as a cooking aid were charged into a stainless steel autoclave facility having a capacity of 10 L, and a digestion reaction was carried out with stirring at 170°C for 3 hours. The cooking liquor after the reaction was cooled to room temperature, pulp component was removed with a screen, and a black liquor including lignin was separated. Dilute sulfuric acid was added to the separated black liquor to adjust the pH to 8, and a resulting precipitate was centrifuged. After washing twice with 500 parts by mass of water, the precipitate was suspended in 5 times the amount of water, and the suspension was readjusted to pH 2 with dilute sulfuric acid. The precipitated lignin is centrifuged again, washed with water, subsequently filtered under suction, spread on a vat, air-dried, and dried in an oven under reduced pressure at a temperature of equal to or lower than 70°C, and 140 parts by mass to 150 parts by weight (in terms of solid content) of an alkali lignin in the form of a brown powder having a solid content of equal to or more than 70% was obtained. The solid content ratio of lignin was calculated from the residual ratio obtained after putting 4 g of a sample in an aluminum cup and drying the sample by heating at 135°C for 1 hour.

(Preparation of Lignin-modified Phenol Resin) Subsequently, a lignin-modified novolac-type phenol resin was synthesized by the following procedure.

100 parts by weight of phenol was introduced into a fournecked flask equipped with a stirrer, a cooling tube, and a thermometer, 41.8 parts by weight of the lignin derivative solid content was slowly added thereto, the mixture was mixed and dispersed at a temperature of equal to or higher than 60°C, 1.8 parts by weight of oxalic acid was added thereto, 53.9 parts by weight of a 37% aqueous solution of formaldehyde was slowly added thereto over 60 minutes to react at 100°C, the mixture after the addition was allowed to react at 100°C for 60 minutes, the temperature was raised to a temperature equal to or higher than 150°C by dehydration at normal pressure and reduced pressure, the mixture was extracted when a desired phenol concentration was reached, and 124.5 parts by weight of lignin-modified novolac-type phenol resin 1 was obtained.

### (Preparation Example 2)

(Preparation of Lignin Derivative) A lignin derivative was obtained in the same manner as in Preparation Example 1, except that 5000 parts by weight of pure water, 150 parts by weight of sodium hydroxide, 80 parts by weight of sodium sulfide, and 70 parts by mass of sodium carbonate as a cooking liquor, and 7.5 parts by weight of 9,10-anthraquinone as a cooking aid were used, a digestion reaction was carried out at 170°C for 2 hours, and the reaction product was dried at a temperature of equal to or lower than 100°C.

(Preparation of Lignin-modified Phenol Resin) 125.0 parts by weight of lignin-modified phenol resin 2 was obtained in the same manner as in Preparation Example 1, except that 100 parts by weight of phenol, 37.4 parts by weight of the lignin derivative solid content, 1.7 parts by weight of oxalic acid, and 51.7 parts by weight of a 37% aqueous solution of formaldehyde were used.

### (Preparation Example 3)

(Preparation of Lignin Derivative) A lignin derivative was obtained in the same manner as in Preparation Example 1, except that beech wood flour having a moisture content of 50% was digested at 195°C for 1 hour by using 3000 parts by weight of ethanol and 2250 parts by weight of water as a cooking liquor, and an aqueous solution obtained by fractionally distilling ethanol from the cooking liquor was centrifuged and freeze-dried to obtain a lignin derivative having a solid content of equal to or more than 90%.

(Preparation of Lignin-modified Phenol Resin) 163.5 parts by weight of lignin-modified phenol resin 3 was obtained in the same manner as in Preparation Example 1, except that 100 parts by weight of phenol, 83.3 parts by weight of the lignin derivative solid content, 1.8 parts by weight of oxalic acid, and 51.7 parts by weight of a 37% aqueous solution of formaldehyde were used.

### (Preparation Example 4)

(Preparation of Lignin Derivative) A lignin derivative was obtained in the same manner as in Preparation Example 1, except that 5000 parts by weight of pure water, 150 parts by weight of sodium hydroxide, 80 parts by weight of sodium sulfide, and 70 parts by mass of sodium carbonate as a cooking liquor, and 7.5 parts by weight of 9,10-anthraquinone as a cooking aid were used.

(Preparation of Lignin-modified Phenol Resin) 158.9 parts by weight of lignin-modified phenol resin 4 was obtained in the same manner as in Preparation Example 1, except that 100 parts by weight of phenol, 26.4 parts by weight of the lignin derivative solid content, 54.4 parts by weight of cashew shell oil, 53.7 parts by weight of a 37% aqueous solution of formaldehyde, and 1.4 parts by weight of 98% sulfuric acid were mixed, and the mixture was subjected to normal pressure dehydration, subsequently neutralized to pH 6 to 8 with an aqueous solution of sodium hydroxide, and subjected to distillation under reduced pressure. Neutralization was measured by dissolving in 1,4-dioxane and extracting with water in an amount 5 times the amount of the resin.

### (Preparation Example 5)

(Preparation of Lignin Derivative) A lignin derivative was obtained in the same manner as in Preparation Example 4.

(Preparation of Lignin-modified Phenol Resin) 148.4 parts by weight of lignin-modified phenol resin 5 was obtained in the same manner as in Preparation Example 1, except that 100 parts by weight of phenol, 65.0 parts by weight of the lignin derivative solid content, 1.8 parts by weight of oxalic acid, and 51.1 parts by weight of a 37% aqueous solution of formaldehyde were used.

### (Preparation Example 6)

(Preparation of Lignin Derivative) 200 parts by weight of cedar wood powder having a moisture content of 50% and 567 parts by weight of pure water as a cooking liquor were charged into a stainless steel autoclave facility having a capacity of 10 L, and the mixture was treated under stirring at 300°C for 1 hour. The cooking liquor after the reaction was cooled to room temperature and separated by filtration to obtain a solid content including lignin. The obtained solid content was immersed in 250 parts of acetone for 12 hours. This was filtered, acetone was distilled off from the filtrate at a temperature of equal to or lower than 70°C, and the residue was dried to obtain 15.2 parts by weight of a lignin derivative.

(Preparation of Lignin-modified Phenol Resin) 139.5 parts by weight of lignin-modified phenol resin 6 was obtained in the same manner as in Preparation Example 1, except that 100 parts by weight of phenol, 49.0 parts by weight of the lignin derivative solid content, 1.5 parts by weight of oxalic acid, and 62.5 parts by weight of a 37% aqueous solution of formaldehyde were used.

The weight average molecular weights, the number average molecular weights, and the softening temperatures of the obtained lignin derivatives were measured using a GPC method or a ring and ball type softening point tester, respectively. The results are shown in Table 1 as "Characteristics of lignin".

Furthermore, the weight average molecular weights, the number average molecular weights, and the lignin modification ratios of the obtained lignin-modified novolac-type phenol resins were measured. These measurement results are shown in Table 1 as "Characteristics of lignin-modified phenol resin".

### (Preparation of Mixture for Friction Material)

In each Example and each Comparative Example, 100 parts by mass of the lignin-modified phenol resin obtained as described above or an unmodified phenol resin, and 10 parts by mass of hexamethylenetetramine were mixed, pulverized and mixed with a small-sized pulverizer, and a heat-curable resin composition having a median diameter of 30 um was obtained. Next, 100 parts by mass of the obtained heat-curable resin composition, 20 parts by weight of cashew dust, 46 parts by mass of aramid fibers as a fiber base material, 144 parts by weight of zirconium silicate and 563 parts by mass of barium sulfate as inorganic filler material, 72 parts by weight of graphite, and 280 parts by weight of potassium titanate were mixed in a mixer to obtain a mixture for a friction material. The details of the materials used are as follows.

### (Phenol Resin)

· Phenol resin 1: Lignin-modified novolac-type phenol resin 1 of Preparation Example 1
· Phenol resin 2: Lignin-modified novolac-type phenol resin 2 of Preparation Example 2
· Phenol resin 3: Lignin-modified novolac-type phenol resin 3 of Preparation Example 3
· Phenol resin 4: Lignin-modified novolac-type phenol resin 4 of Preparation Example 4
· Phenol resin 5: Lignin-modified novolac-type phenol resin 5 of Preparation Example 5
· Phenol resin 6: Unmodified novolac-type phenol resin (Mw = 12640, Mn = 1200)

### (Curing Agent)

· Curing agent: Hexamethylenetetramine

### (Fiber Base Material)

· Aramid fibers: Manufactured by DUPONT, Inc., trade name "KEVLAR"

### (Inorganic Filler Material)

· Cashew dust: FF-1081 manufactured by Tohoku Chemical Industries, Ltd.
· Zirconium silicate: DM-ZCA manufactured by Daiichi Kigenso Kagaku Kogyo Co., Ltd.
· Graphite: F#2 from Nippon Graphite Industries Co., Ltd.
· Potassium titanate: TERRACESS PS manufactured by Otsuka Chemical Co., Ltd.
· Barium sulfate: Elutriated barium sulfate manufactured by Sakai Chemical Industry Co., Ltd.

### (Evaluation of Performance of Powdery Mixture for Friction Material)

The flow of the obtained mixture for a friction material was measured by the following method.

### (Flow)

Using a powdery mixture obtained by the above-described method, the flow was measured according to the flow A method of JIS K 6910 "Phenol Resin Testing Methods". As the flow of the powdery mixture is longer, a cured product thereof has higher strength.

### (Production of Friction Material)

The obtained mixture for a friction material was cured and molded at a temperature of 150°C and a pressure of 15 MPa for 240 seconds, and a cured product thereof was baked at 200°C for 3 hours to produce a molded body (friction material). The molded body was processed into a rectangular parallelepiped test piece having an area of 4.5 cm², and the abrasiveness of the obtained test piece was evaluated.

### (Evaluation of Performance of Friction Material)

The obtained test piece was evaluated for the following items.

### (Hardness)

The obtained test piece was baked according to JIS K 7202 "Method of Rockwell Hardness Test for Plastics", and then the Rockwell hardness was measured at normal temperature (25°C).

### (Bending Strength (25°C) and Flexural Modulus (25°C))

The flexural modulus and bending strength were measured at 25°C according to JIS K 6911 "General Testing Methods for Thermosetting Plastics". Specifically, a three-point bending test was performed by applying a load at a rate of 2 mm/min using a precision universal testing machine (AUTOGRAPH AG-Xplus manufactured by Shimadzu Corporation).

### (Bending Strength (25°C) and Flexural Modulus (25°C) After 350°C Treatment)

For each test piece, the bending strength of the test piece was measured after a treatment at 350°C for 4 hours.

### (Wear Amount When Rubbed at 300°C)

A rubbing test was performed on the obtained test piece using a scale dynamometer. A rotor was made of cast iron, one braking was defined as a period from brake operation under the conditions of an initial speed of 100 km/h, a brake temperature before braking of equal to or lower than 300°C, and a deceleration of 5.0 m/sec² until stopping, braking was performed 50 times under the same conditions, and the abrasion loss of the test piece during the testing period was measured. For the wear amount, the thickness of the test piece was measured before the test and after the test, and the thickness that was abraded was defined as the wear amount (mm). The results are shown in Table 1 as "Wear amount (300°C)".

### [Table 1]

**Table 1**

| Example No. | | Comparative Example 1 | Comparative Example 2 | Example 1 | Example 2 | Example 3 | Example 4 | Example 5 |
|---|---|---|---|---|---|---|---|---|
| Phenol resin No. | | 7 | 6 | 1 | 2 | 3 | 4 | 5 |

| <Characteristics of lignin> | | | | | | | | |
|---|---|---|---|---|---|---|---|---|
| Raw material tree type | | - | Coniferous tree | Coniferous tree | Coniferous tree | Broadleaf tree | Coniferous tree | Coniferous tree |
| Lignin production method | | - | High-temperature high-pressure water | Soda | Kraft | Organosolv | Kraft | Kraft |
| Mn | NMP | - | 580 | 2000 | 1920 | 1050 | 1450 | 1450 |
| Mw | NMP | - | 2510 | 14000 | 15100 | 3680 | 8500 | 8450 |
| Softening temperature | °C | 120 | 115 | 126 | 119 | 119 | 106 | 134 |

| <Characteristics of lignin-modified phenol resin> | | | | | | | | |
|---|---|---|---|---|---|---|---|---|
| Molar ratio (F/P) upon synthesis | | - | 0.73 | 0.63 | 0.6 | 0.68 | 0.62 | 0.59 |
| Mn | NMP | 1480 | 900 | 1,070 | 960 | 1060 | 1290 | 1450 |
| Mw | NMP | 11,900 | 3,100 | 16800 | 10500 | 6700 | 14900 | 14800 |
| Lignin modification ratio | % | 0 | 35 | 34 | 30 | 51 | 17 | 44 |
| Cashew modification ratio | % | 0 | 0 | 0 | 0 | 0 | 34 | 0 |
| Amount of free phenol | % by mass | 2.0 | 1.4 | 0.7 | 0.9 | 1.1 | 0.3 | 0.6 |

| <Characteristics of powdery resin composition for friction material> | | | | | | | | |
|---|---|---|---|---|---|---|---|---|
| Flow (125°C) | mm | 20 | 27 | 15 | 26 | 10 | 53 | 9 |

| <Characteristics of friction material> | | | | | | | | |
|---|---|---|---|---|---|---|---|---|
| Hardness | N/mm² | 65 | 77 | 55 | 60 | 48 | 59 | 54 |
| Bending strength (25°C) | N/mm² | 33.0 | 31.0 | 24.0 | 27.0 | 21.1 | 29.0 | 19.4 |
| Flexural modulus (25°C) | | 9.7 | 9.9 | 7.5 | 8.3 | 6.7 | 8.2 | 5.9 |
| Bending strength after treatment at 350°C | N/mm² | 1.9 | 3.1 | 2.6 | 2.3 | 2.0 | 2.3 | 2.3 |
| Flexural modulus after treatment at 350°C | | 1.1 | 1.6 | 1.4 | 1.3 | 1.1 | 1.3 | 1.3 |
| Wear amount (300°C) | mm | 1.10 | 1.06 | 0.96 | 1.01 | 1.05 | 1.04 | 1.01 |

This application claims priority on the basis of Japanese Patent Application No. 2021-064598, filed April 6, 2021, the disclosure of which is incorporated herein in its entirety by reference.

## Claims

1. A heat-curable resin composition for a friction material, comprising:
a lignin-modified novolac-type phenol resin having a weight average molecular weight of equal to or more than 6,000; and
a curing agent.

2. The heat-curable resin composition for a friction material according to claim 1,
wherein the lignin-modified novolac-type phenol resin has a lignin modification ratio of equal to or more than 25% and equal to or less than 60%, or the lignin-modified novolac-type phenol resin has a biomass modification ratio of equal to or more than 35% and equal to or less than 60%.

3. The heat-curable resin composition for a friction material according to claim 1 or 2,
wherein the lignin-modified novolac-type phenol resin is a resin obtained by causing a lignin compound, a phenol compound, and an aldehyde compound to react in a presence of an acid catalyst under conditions in which a molar ratio (F/P) of the aldehyde compound to the phenol compound is equal to or more than 0.5.

4. The heat-curable resin composition for a friction material according to claim 3,
wherein the lignin compound has a weight average molecular weight of equal to or more than 2,000 and equal to or less than 100,000.

5. The heat-curable resin composition for a friction material according to any one of claims 1 to 4,
wherein the curing agent includes hexamethylenetetramine.

6. The heat-curable resin composition for a friction material according to any one of claims 1 to 5,
wherein the heat-curable resin composition is in a powdery form with an average particle size of equal to or more than 10 µm and equal to or less than 60 pm.

7. A friction material comprising:
a cured product of the heat-curable resin composition for a friction material according to any one of claims 1 to 6.

8. The friction material according to claim 7,
wherein the friction material is a brake pad, a brake lining, or a clutch facing.
